# EUROPEAN PATENT APPLICATION

(11) **EP 4 465 737 A1**
(43) Date of publication of application: **20.11.2024**
(21) Application number: 22917941.1
(22) Date of filing: 10.01.2022
(51) Int. Cl.: H04W 74/00

(54) **CELL ACCESS METHOD AND APPARATUS, AND DEVICE AND READABLE STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/071117
(87) International publication number: WO 2023/130471

(57) **Abstract**

The present disclosure relates to the field of communications. Provided are a cell access method and apparatus, and a device and a readable storage medium. The method comprises: acquiring the bandwidth of an initial bandwidth part (BWP) configured by a target cell; and determining an access result concerning the target cell on the basis of the bandwidth of the initial BWP and a support bandwidth of a first-type terminal. For a first-type terminal, the bandwidth of an initial BWP configured by a target cell is first acquired, and whether cell barring is experienced by the first-type terminal is thus determined according to a support bandwidth of the first-type terminal and the bandwidth of the initial BWP configured by the target cell, such that the problem of a Redcap terminal being unable to determine whether cell barring occurs is avoided.

## Description

### TECHNICAL FIELD

The disclosure relates to a field of communication, and more particularly to a method and an apparatus for accessing a cell, a device and a readable storage medium.

### BACKGROUND

Third Generation Partnership Project (3GPP) has carried out research on a project of R17 reduced capability NR (RedCap) devices, with a goal of reducing a complexity of a terminal and saving a terminal cost on a basis of coexistence with an R15/16 terminal.

However, there is no proper solution on whether a bandwidth limitation of an uplink/downlink initial bandwidth part (BWP) may lead to a cell bar state of the RedCap device.

### SUMMARY

Embodiments of the disclosure provide a method and an apparatus for accessing a cell, a device and a readable storage medium, which may indicate whether a reduced capability (RedCap) terminal is cell-barred. The technical solution is as follows.

An aspect provides a cell access method, performed by a first type of terminal. The method includes:
obtaining a bandwidth of an initial bandwidth part (BWP) configured by a target cell; and
determining an access result for the target cell based on the bandwidth of the initial BWP and a supported bandwidth of the first type of terminal.

Another aspect provides a cell access method, performed by an access network device of a target cell. The method includes:
sending configuration information to a first type of terminal, the configuration information including an information field for configuring an initial BWP. The first type of terminal is configured to determine an access result for the target cell based on a bandwidth of the initial BWP and a supported bandwidth.

Another aspect provides a cell access apparatus. The apparatus includes:
a processing module, configured to obtain a bandwidth of an initial BWP configured by a target cell.

The processing module is further configured to determine an access result for the target cell based on the bandwidth of the initial BWP and a supported bandwidth of a first type of terminal.

Another aspect provides a cell access apparatus. The apparatus includes:
a sending module, configured to send configuration information to a first type of terminal. The configuration information includes an information field for configuring an initial BWP. The first type of terminal is configured to determine an access result for the target cell based on a bandwidth of the initial BWP and a supported bandwidth.

Another aspect provides a terminal. The terminal includes:
a processor;
a transceiver, connected to the processor; and
a memory for storing an executable signaling of the processor.

The processor is configured to load and to execute the executable signaling to implement the cell access method according to the above embodiments of the disclosure.

Another aspect provides an access network device. The access network device includes:
a processor;
a transceiver, connected to the processor; and
a memory for storing an executable signaling of the processor.

The processor is configured to load and to execute the executable signaling to implement the cell access method according to the above embodiments of the disclosure.

Another aspect provides a computer-readable storage medium having at least one instruction, at least one program, a code set or an instruction set stored thereon. The at least one instruction, the at least one program, the code set or the instruction set is loaded and executed by a processor to implement the method for accessing the cell according to the above embodiments of the disclosure.

Beneficial effects brought by the technical solution provided in embodiments of the disclosure at least include followings.

For the first type of terminal, the bandwidth of the initial BWP configured by the target cell is obtained, and then whether the first type of terminal is cell-barred is determined based on the supported bandwidth of the first type of terminal and the bandwidth of the initial BWP configured by the target cell, avoiding the problem of a Redcap terminal being unable to determine whether it is cell-barred.

### BRIEF DESCRIPTION OF THE DRAWINGS

In order to clearly illustrate the technical solutions in embodiments of the disclosure, a brief introduction will be made to accompanying drawings required in the description of the embodiments below. Apparently, the accompanying drawings described below are only a part of embodiments of the disclosure. For the ordinary skilled in the art, other accompanying drawings may further be obtained based on these accompanying drawings without creative work.
FIG. 1 is a schematic diagram illustrating a communication system according to an exemplary embodiment of the disclosure.
FIG. 2 is a flow chart illustrating a cell access method according to an exemplary embodiment of the disclosure.
FIG. 3 is a flow chart illustrating a cell access method according to an exemplary embodiment of the disclosure.
FIG. 4 is a flow chart illustrating a cell access method according to an exemplary embodiment of the disclosure.
FIG. 5 is a flow chart illustrating a cell access method according to an exemplary embodiment of the disclosure.
FIG. 6 is a flow chart illustrating a cell access method according to an exemplary embodiment of the disclosure.
FIG. 7 is a block diagram illustrating a cell access apparatus according to an exemplary embodiment of the disclosure.
FIG. 8 is a block diagram illustrating a cell access apparatus according to an exemplary embodiment of the disclosure.
FIG. 9 is a block diagram illustrating a terminal according to an exemplary embodiment of the disclosure.
FIG. 10 is a block diagram illustrating an access network device according to an exemplary embodiment of the disclosure.

### DETAILED DESCRIPTION

In order to make the purpose, the technical solution and the advantages of the disclosure clearer, detailed description will be further made below to implementations of the disclosure with reference to the accompanying drawings.

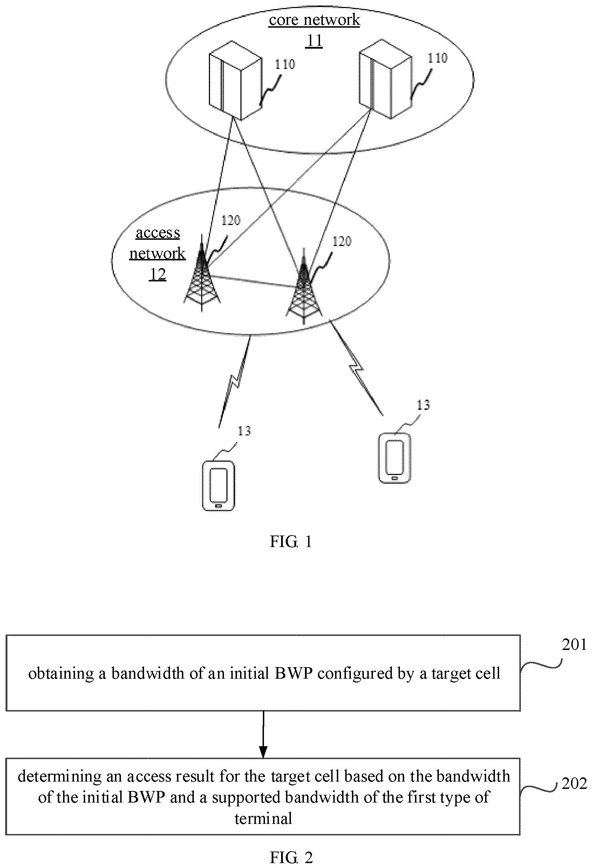

FIG. 1 is a schematic diagram illustrating a communication system according to an exemplary embodiment of the disclosure. The communication system may include a core network 11, an access network 12 and a terminal 13.

The core network 11 includes several core network devices 110. The core network device 110 includes devices such as an access and mobility management function (AMF) element, a session management function (SMF) element and a user plane management function (UPF) element. The AMF is configured to control a function of the terminal, such as an access authority, a handover function, and the like. The SMF is configured to provide server continuity and uninterrupted user experience of a server, such as a change of an IP address and an anchor point, and the like.

The access network 12 includes several access network devices 120. The access network device 120 may be a base station. The base station is a device deployed in an access network to provide a wireless communication function for the terminal. The base station may include various forms of macro base stations, micro base stations, relay stations, access points and the like. The name of a device with a base station function may vary in systems with different wireless access technologies. For example, it is called an eNodeB or an eNB in a long-term evolution (LTE) system, and called a gNode B or a gNB in a 5G new radio (NR) system. With the development of communication technologies, description for the name "base station" may be changed. For convenience, in embodiments of the disclosure, the above devices providing the wireless communication function for the terminal are collectively referred to as an access network device.

The terminal 13 may include various handheld devices, vehicle-mounted devices, wearable devices, computing devices or other processing devices connected to a wireless modem, as well as various forms of user equipments (UEs), mobile station (MSs), terminal devices, and the like. For the convenience of description, the devices mentioned above are collectively referred to as the terminal. The access network device 120 and the terminal 13 communicate with each other through certain air interface technologies, such as a Uu interface.

Alternatively, the terminal 13 needs to meet an access bandwidth requirement of the access network device 120 when accessing the access network device 120.

3GPP has carried out a research on a project of R17 reduced capability NR (RedCap) devices, with a goal of reducing a complexity of the terminal and saving a terminal cost on the basis of coexistence with a R15/16 terminal.

A RedCap terminal, or simply an NR-lite (lightweight) terminal, is similar to an Internet of Things (IOT) device in an LTE and may meet following requirements:
1. low cost and low complexity;
2. enhanced coverage to a certain extent;
3, saving power; and
4. some Redcap terminals including one receiving antenna, and some Redcap terminals including two receiving antennas.

According to a current NR protocol, in case that a bandwidth of an uplink or downlink initial BWP configured in a system information block (SIB) 1 is wider than a bandwidth supported by a terminal, it means that the terminal is in a cell-bar state at this time, and it is considered that intra-frequency cell reselection is allowed at this time.

The bandwidth supported by the terminal is a maximum uplink or downlink bandwidth supported by the terminal.

After the introduction of the Redcap terminal, cell bar processing on the Redcap terminal also needs to be considered, just like an ordinary NR terminal.

A system message is information repeatedly broadcast by an access network device of a cell. The system information is classified into a master information block (MIB), and a system information block (SIB). When the access network device is turned on, the MIB may be sent first and then a series of SIBs are sent.

In embodiments of the disclosure, a cell access method for a system of a UE with a low bandwidth reduced capability is provided. FIG. 2 is a flow chart illustrating a cell access method according to an exemplary embodiment of the disclosure. Description is made by taking that the method is performed by a first type of terminal as an example. As illustrated in FIG. 2, the method includes the following.

At step 201, a bandwidth of an initial BWP configured by a target cell is obtained.

The first type of terminal includes a Redcap terminal introduced in R17, or the first type of terminal includes an enhanced Redcap terminal introduced in a further version, which is not limited in embodiments.

In some embodiments, the initial BWP is a BWP independently configured by the target cell for the first type of terminal, or the initial BWP is a BWP synchronously configured by the target cell for the first type of terminal and other types of terminals, or the initial BWP is a default BWP configured by the target cell, which is not limited in embodiments.

The initial BWP includes an uplink initial BWP and/or a downlink initial BWP.

That is, a bandwidth of the uplink initial BWP configured by the target cell is obtained, and/or a bandwidth of the downlink initial BWP configured by the target cell is obtained.

At step 202, an access result for the target cell is determined based on the bandwidth of the initial BWP and a supported bandwidth of the first type of terminal.

In some embodiments, in case that the bandwidth of the initial BWP is wider than the supported bandwidth of the first type of terminal, it is determined that the first type of terminal is in a cell bar state, that is, the first type of terminal is barred from accessing the target cell.

Alternatively, it is determined that the first type of terminal is in the cell bar state in case that the bandwidth of the uplink initial BWP is wider than (or equal to) the supported bandwidth of the first type of terminal.

Alternatively, it is determined that the first type of terminal is in the cell bar state in case that the bandwidth of the downlink initial BWP is wider than (or equal to) the supported bandwidth of the first type of terminal.

Or, in other embodiments, it is determined that the first type of terminal is in the cell bar state in case that the bandwidth of the initial BWP is wider than or equal to the supported bandwidth of the first type of terminal.

In embodiments of the disclosure, for example, the first type of terminal is in the cell bar state in case that in case that the bandwidth of the initial BWP is wider than the supported bandwidth of the first type of terminal, description is made by taking this case as an example.

In conclusion, with the method according to this embodiment, for the first type of terminal, the bandwidth of the initial BWP configured by the target cell is obtained, and whether the first type of terminal is in the cell bar state is determined based on the supported bandwidth of the first type of terminal and the bandwidth of the initial BWP configured by the target cell, thereby avoiding a problem that the Redcap terminal may be unable to determine whether there is the cell bar.

Description is made respectively to the uplink initial BWP and the downlink initial BWP.

### 1, the uplink initial BWP

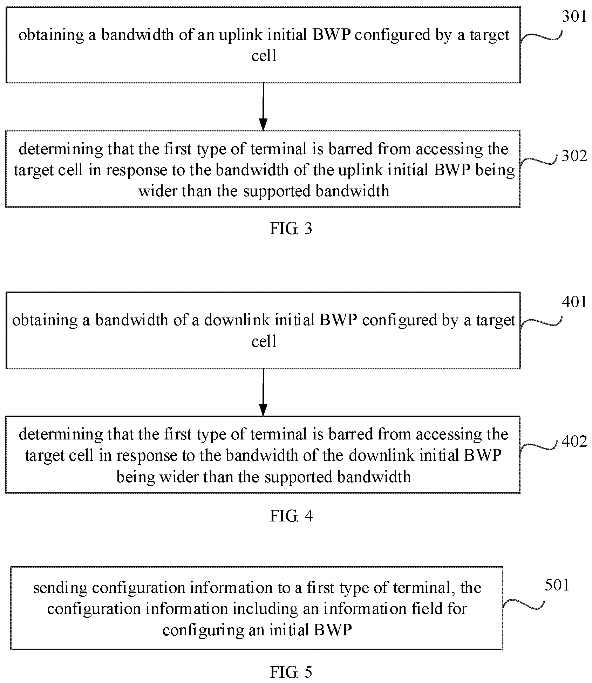

Schematically, FIG. 3 is a flow chart illustrating a cell access method according to an exemplary embodiment of the disclosure. Description is made by taking that the method is performed by the first type of terminal as an example. As illustrated in FIG. 3, the method includes the following.

At step 301, a bandwidth of an uplink initial BWP configured by a target cell is obtained.

Alternatively, obtaining the bandwidth of the uplink initial BWP configured by the target cell includes at least one of following ways.

First way, first configuration information is received, the first configuration information includes an information field for configuring the uplink initial BWP, and the bandwidth of the uplink initial BWP configured for the first type of terminal in the first configuration information is determined.

That is, the first configuration information includes the uplink initial BWP configured separately for the first type of terminal.

For example, the first configuration information is implemented as an SIB 1. In case that a single uplink initial BWP is configured for the first type of terminal in the SIB1, the uplink initial BWP configured for the first type of terminal is directly employed as the uplink initial BWP. The first configuration information includes the information field for configuring the uplink initial BWP, the determined bandwidth of the uplink initial BWP configured for the first type of terminal in the first configuration information may be carried in an SIB-X.

Alternatively, in case that the uplink initial BWP configured for the first type of terminal is included in the SIB1, regardless of whether an uplink initial BWP configured for a second type of terminal is included in the SIB1, the uplink initial BWP configured for the first type of terminal in the SIB1 is determined as the uplink initial BWP of the first type of terminal. That is, the uplink initial BWP configured for the first type of terminal in the SIB1 is preferentially employed.

Second way, the first configuration information is received, the first configuration information includes an information field for configuring the uplink initial BWP; and in response to the first configuration information including an uplink initial BWP configured for the second type of terminal, a bandwidth of the uplink initial BWP configured for the second type of terminal is determined as the bandwidth of the uplink initial BWP corresponding to the first type of terminal. The first configuration information includes the information field for configuring the uplink initial BWP. In response to the first configuration information including the uplink initial BWP configured for the second type of terminal, information carried by the first configuration information may be carried in an SIB-y. The SIB-y may be the same as the SIB-x or may be an information block different from the SIB-x.

Alternatively, in response to the first configuration information including the uplink initial BWP configured for the second type of terminal and the uplink initial BWP for the first type of terminal being not configured in the first configuration information, the bandwidth of the uplink initial BWP configured for the second type of terminal is determined as the bandwidth of the uplink initial BWP corresponding to the first type of terminal.

For example, the first configuration information is implemented as the SIB 1.In case that the SIB 1 configures the uplink initial BWP for the second type of terminal, and that the SIB 1 does not configure a single uplink initial BWP for the first type of terminal, the first type of terminal determines the uplink initial BWP configured for the second type of terminal as the uplink initial BWP of the first type of terminal. Alternatively, the first type of terminal is a Redcap terminal, and the second type of terminal is a non-Redcap terminal, that is, an ordinary terminal.

At step 302, it is determined that the first type of terminal is barred from accessing the target cell in response to the bandwidth of the uplink initial BWP being wider than the supported bandwidth.

That the first type of terminal is barred from accessing the target cell means that the first type of terminal cancels accessing or does not access the target cell, that is, the first type of terminal is cell bar for the target cell.

That is, it is determined that the first type of terminal is in the cell bar state for the target cell in case that the bandwidth of the uplink initial BWP is wider than a maximum uplink bandwidth supported by the first type of terminal.

In conclusion, with the method according to this embodiment, for the first type of terminal, the bandwidth of the uplink initial BWP configured by the target cell is obtained based on the first configuration information, such that it is determined whether the first type of terminal is in the cell bar state based on the supported bandwidth of the first type of terminal and the bandwidth of the uplink initial BWP configured by the target cell, thereby avoiding the problem that the Redcap terminal may be unable to determine whether there is the cell bar.

### 1, the downlink initial BWP

Schematically, FIG. 4 is a flow chart illustrating a cell access method according to an exemplary embodiment of the disclosure. Description is made by taking that the method is performed by the first type of terminal as an example. As illustrated in FIG. 4, the method includes the following.

At step 401, a bandwidth of a downlink initial BWP configured by a target cell is obtained.

Alternatively, obtaining the bandwidth of the downlink initial BWP configured by the target cell includes at least one of following ways:

First way, second configuration information is received, the second configuration information includes an information field for configuring the downlink initial BWP, and the bandwidth of the downlink initial BWP configured for the first type of terminal in the second configuration information is determined.

That is, the second configuration information includes the downlink initial BWP configured separately for the first type of terminal.

For example, the second configuration information is implemented as an SIB 1. In case that a single downlink initial BWP is configured for the first type of terminal in the SIB1, the downlink initial BWP configured for the first type of terminal is directly employed as the downlink initial BWP.

Alternatively, in case that the downlink initial BWP configured for the first type of terminal is included in the SIB1, regardless of whether a downlink initial BWP configured for the second type of terminal is included in the SIB1, the downlink initial BWP configured for the first type of terminal in the SIB1 is determined as the downlink initial BWP of the first type of terminal. That is, the downlink initial BWP configured for the first type of terminal in the SIB1 is preferentially employed.

Second way, the second configuration information is received, the second configuration information includes an information field for configuring the downlink initial BWP; and in response to the second configuration information including a downlink initial BWP configured for the second type of terminal, a bandwidth of the downlink initial BWP configured for the second type of terminal is determined as the bandwidth of the downlink initial BWP corresponding to the first type of terminal.

Alternatively, in response to the second configuration information including the downlink initial BWP configured for the second type of terminal and the downlink initial BWP for the first type of terminal being not configured in the second configuration information, the bandwidth of the downlink initial BWP configured for the second type of terminal is determined as the bandwidth of the downlink initial BWP corresponding to the first type of terminal.

For example, the second configuration information is implemented as the SIB1. In case that the SIB1 configures the downlink initial BWP for the second type of terminal, and that the SIB does not configure a single downlink initial BWP for the first type of terminal, the first type of terminal determines that the downlink initial BWP configured for the second type of terminal is the downlink initial BWP of the first type of terminal. Alternatively, the first type of terminal is a Redcap terminal, and the second type of terminal is a non-Redcap terminal, that is, an ordinary terminal.

Third way, a bandwidth of an initial control resource set (CORESET) configured in a master information block (MIB) is determined as the bandwidth of the downlink initial BWP corresponding to the first type of terminal.

In some embodiments, in case that the downlink initial BWP is or is not configured to the second type of terminal in the second configuration information, and the downlink initial BWP is not configured to the first type of terminal in the second configuration information, a bandwidth of CORESET#0 configured in the MIB is determined as the bandwidth of the downlink initial BWP corresponding to the first type of terminal.

Schematically, regardless of whether the downlink initial BWP is configured to the second type of terminal in the SIB 1, including: 1. configured; 2. not configured; or 3. the bandwidth of the downlink initial BWP configured for the second type of terminal being wider than or narrower than the supported bandwidth of the first type of terminal, the single downlink initial BWP for the first type of terminal is not configured in the SIB1, then the first type of terminal determines the bandwidth of the CORESET#0 determined based on a parameter in the MIB as the downlink initial BWP, and may access normally at this time.

It is worth noting that, the first configuration information and the second configuration information may be implemented as same configuration information, or implemented as different configuration information. In this embodiment, both the first configuration information and the second configuration information are realized as the SIB 1.

At step 402, it is determined that the first type of terminal is barred from accessing the target cell in response to the bandwidth of the downlink initial BWP being wider than the supported bandwidth.

That the first type of terminal is barred from accessing the target cell means that the first type of terminal cancels accessing or does not access the target cell. That is, the first type of terminal is in a cell-bar state for the target cell.

That is, it is determined that the first type of terminal is in the cell-bar state for the target cell in case that the bandwidth of the downlink initial BWP is wider than a maximum downlink bandwidth supported by the first type of terminal.

In conclusion, with the method according to this embodiment, for the first type of terminal, the bandwidth of the downlink initial BWP configured by the target cell is obtained based on the second configuration information, such that it is determined whether the first type of terminal is in the cell-bar state based on the supported bandwidth of the first type of terminal and the bandwidth of the downlink initial BWP configured by the target cell, thereby avoiding the problem that the Redcap terminal may be unable to determine whether there is the cell bar.

It is worth noting that, it is determined that the first type of terminal is in the cell-bar state in case that the bandwidth of the uplink initial BWP is wider than the maximum supported bandwidth of the first type of terminal; and/or, it is determined that the first type of terminal is in the cell-bar state in case that the bandwidth of the downlink initial BWP is wider than the maximum supported bandwidth of the first type of terminal.

That is, it is determined that the first type of terminal is in the cell-bar state when the bandwidth of the uplink initial BWP is wider than that of the first type of terminal, or when the bandwidth of the downlink initial BWP is wider than that of the first type of terminal, or when both of the two are met.

In some embodiments, for the downlink initial BWP, when the target cell separately configures a BWP for the first type of terminal, that is, the SIB1 sent by the target cell to the first type of terminal includes the BWP separately configured for the first type of terminal, the network configures a single downlink initial BWP for the first type of terminal; or, the network configures multiple single downlink initial BWPs for the first type of terminal.
1. The network configures a single downlink initial BWP for the first type of terminal.
   Alternatively, the downlink initial BWP includes CORESET#0. The downlink initial BWP is configured to for the first type of terminal to receive a random access response (RAR), a paging message and a system message.
2. The network configures multiple single downlink initial BWPs for the first type of terminal.

Alternatively, a first downlink initial BWP configured by the target cell is obtained, and the first downlink initial BWP is configured to receive a random access response, RAR.

A second downlink initial BWP configured by the target cell is obtained, and the second downlink initial BWP is configured to receive a paging message.

Alternatively, the first type of terminal receives a system message by employing an MIB-configured initial BWP.

Alternatively, after the first type of terminal determines the downlink initial BWP, it is determined that the first type of terminal is in the cell-bar in case that the downlink initial BWP is wider than the maximum downlink bandwidth supported by the first type of terminal.

Description will be made respectively to the number of configured downlink initial BWPs for the above configuration.

In an alternative embodiment, the network configures a single downlink initial BWP for the first type of terminal. In case that the BWP includes CORESET#0, for the first type of terminal, the terminal determines the cell bare if the downlink initial BWP is wider than the maximum downlink bandwidth supported by the first type of terminal.

In an alternative embodiment, the network configures a single downlink initial BWP1 for the first type of terminal. The downlink initial BWP1 is configured to receive the RAR. When the bandwidth of the BWP1 is wider than the maximum downlink bandwidth supported by the first type of terminal, since the first type of terminal may fall back to the MIB-configured initial BWP to receive a system message, the terminal does not determine the cell bar at this time.

In an alternative embodiment, the network configures a single downlink initial BWP2 for the first type of terminal. The downlink initial BWP2 is configured to receive the paging message. When the bandwidth of the BWP2 is wider than the maximum downlink bandwidth supported by the first type of terminal, since the first type of terminal may fall back to the MIB-configured initial BWP to receive the system message, the terminal does not determine the cell bar at this time.

FIG. 5 is a flow chart illustrating a cell access method according to an exemplary embodiment of the disclosure. Taking that the method is performed by the access network device as an example, as illustrated in FIG. 5, the method includes the following.

At step 501, configuration information is sent to a first type of terminal, and the configuration information includes an information field for configuring an initial BWP.

Alternatively, the terminal of the first type is configured to determine an access result for a target cell based on a bandwidth of the initial BWP and a supported bandwidth.

Alternatively, the configuration information includes first configuration information or second configuration information.

That is, 1. The first configuration information is sent to the first type of terminal.

The first configuration information includes an information field for configuring an uplink initial BWP for the first type of terminal; or, the first configuration information includes an information field for configuring an uplink initial BWP for the second type of terminal, and the first configuration information does not include the uplink initial BWP configured for the first type of terminal.

The first type of terminal determines a bandwidth of the uplink initial BWP based on the first configuration information in case that the first configuration information includes the information field for configuring the uplink initial BWP for the first type of terminal. The first type of terminal determines a bandwidth of the uplink initial BWP of the second type of terminal as the bandwidth of the uplink initial BWP in case that the first configuration information includes the information field for configuring the uplink initial BWP for the second type of terminal and does not include the uplink initial BWP configured for the first type of terminal.

2. The second configuration information is sent to the first type of terminal.

The second configuration information includes an information field for configuring a downlink initial BWP for the first type of terminal; or, the second configuration information includes an information field for configuring a downlink initial BWP for the second type of terminal, and does not include the downlink initial BWP configured for the first type of terminal.

The first type of terminal determines a bandwidth of the downlink initial BWP based on the second configuration information in case that the second configuration information includes an information field for configuring the downlink initial BWP for the first type of terminal. The first type of terminal determines the bandwidth of the downlink initial BWP of the second type of terminal as the bandwidth of the downlink initial BWP in case that the second configuration information includes the information field for configuring the downlink initial BWP for the second type of terminal and does not include the downlink initial BWP configured for the first type of terminal. Alternatively, a bandwidth of CORESET#0 configured in a MIB is employed as the bandwidth of the downlink initial BWP in case that the second configuration information does not include the downlink initial BWP configured for the first type of terminal, regardless of whether to include the downlink initial BWP configured for the second type of terminal.

Alternatively, the downlink initial BWP includes a first downlink initial BWP, and the first downlink initial BWP is configured to receive a RAR.

The downlink initial BWP includes a second downlink initial BWP, and the second downlink initial BWP is configured to receive a paging message.

The first configuration information and the second configuration information may be implemented as a same system message or implemented as different system messages. In this embodiment, description is made by taking that both the first configuration information and the second configuration information are implemented as the SIB1 as an example.

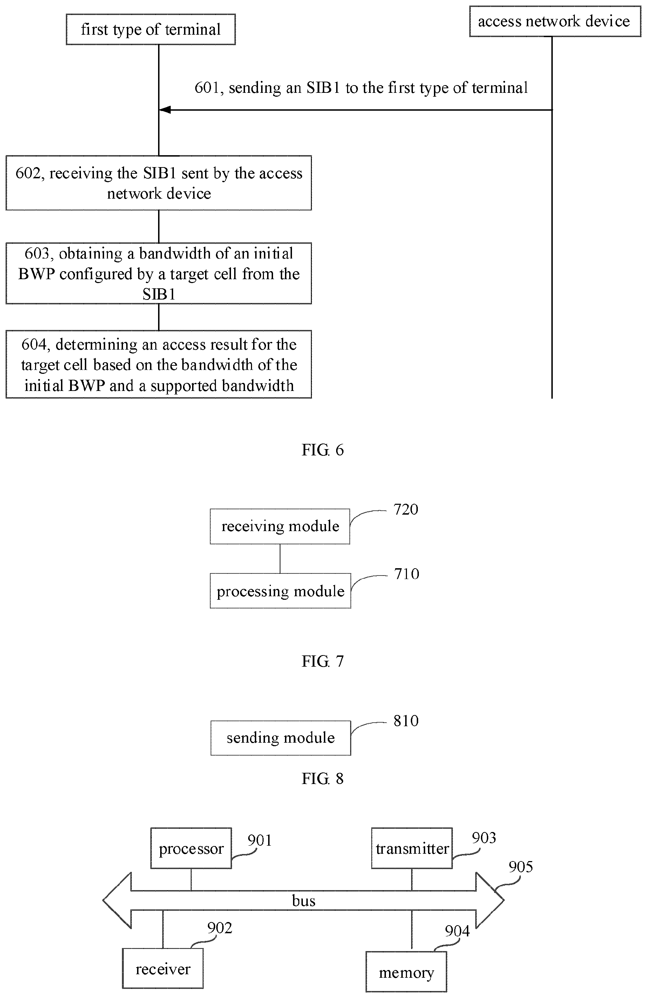

FIG. 6 is a flow chart illustrating a method for accessing a cell according to another exemplary embodiment of the disclosure. Taking that the method is performed by an access network device and a first type of terminal as an example, as illustrated in FIG. 6, the method includes the following.

At step 601, the access network device sends an SIB1 to the first type of terminal.

The SIB1 includes an information field for configuring an initial BWP.

Alternatively, the SIB1 includes an information field for configuring an uplink initial BWP, and/or the SIB1 includes an information field for configuring a downlink initial BWP.

In some embodiments, the SIB1 includes an initial BWP particularly configured by a cell for the first type of terminal; or the SIB1 includes a common initial BWP configured by the cell for the first type of terminal and a second type of terminal.

At step 602, the first type of terminal receives the SIB 1 sent by the access network device.

At step 603, the first type of terminal obtains a bandwidth of the initial BWP configured by a target cell from the SIB 1.

Schematically, in case that the SIB1 includes the uplink initial BWP configured for the first type of terminal, regardless of whether the SIB1 includes the uplink initial BWP configured for the second type of terminal, the uplink initial BWP configured for the first type of terminal in the SIB1 is taken as the uplink initial BWP of the first type of terminal. In case that the uplink initial BWP is configured for the second type of terminal in the SIB1, but no uplink initial BWP is separately configured for the first type of terminal in the SIB1, the first type of terminal determines the uplink initial BWP configured for the second type of terminal as the uplink initial BWP of the first type of terminal.

Schematically, in case that the SIB1 includes the downlink initial BWP configured for the first type of terminal, regardless of whether the SIB1 includes the downlink initial BWP configured for the second type of terminal, the downlink initial BWP configured for the first type of terminal in the SIB1 is taken as the downlink initial BWP of the first type of terminal. In case that the downlink initial BWP is configured for the second type of terminal in the SIB1, but no downlink initial BWP is separately configured for the first type of terminal in the SIB1 at this time, the first type of terminal determines the downlink initial BWP configured for the second type of terminal as the downlink initial BWP of the first type of terminal. Alternatively, regardless of whether the downlink initial BWP is configured for the second type of terminal in the SIB1, which includes: 1. configured; 2. not configured; 3. the downlink initial BWP bandwidth configured for the second type of terminal being wider than or narrower than a supported bandwidth of the first type of terminal, as long as the SIB1 does not separately configure the downlink initial BWP for the first type of terminal, the first type of terminal determines a bandwidth of CORESET#0 determined by a parameter in the MIB as the downlink initial BWP, and may access normally at this time.

At step 604, the first type of terminal determines an access result for the target cell based on the bandwidth of the initial BWP and a supported bandwidth.

Alternatively, in case that the bandwidth of the initial BWP is wider than a maximum uplink/downlink bandwidth supported by the first type of terminal, it is determined that the first type of terminal is barred from accessing the target cell, that is, a cell bar of the first type of terminal occurs; otherwise, it is determined that the first type of terminal is able to access the target cell.

In conclusion, with the method according to this embodiment, for the first type of terminal, the bandwidth of the initial bandwidth part BWP configured by the target cell is obtained, and whether the first type of terminal is in the cell bar state is determined based on the supported bandwidth of the first type of terminal and the bandwidth of the initial BWP configured by the target cell, thereby avoiding a problem that the Redcap terminal may be unable to determine whether there is the cell bar.

In some embodiments, cell reselection is performed in response to the first type of terminal is barred from accessing to the target cell.

In some embodiments, the cell reselection is performed when the first type of the terminal determines that the cell bar is obtained for the uplink initial BWP or the downlink initial BWP.

Schematically, in case that the first type of terminal obtains a configuration in the SIB1, the first type of terminal may perform determination based on the uplink initial BWP or downlink initial BWP in the configuration of the SIB1, and perform cell reselection in response to determining that the first type of terminal is in the cell-bar state.

The cell reselection includes at least one of following ways:
First way, the cell reselection is performed based on a cell reselection switch in a master information block.

As an alternative embodiment, a cell reselection way of the first type of terminal is consistent with that of the second type of terminal. Description is made by taking that the first type of terminal is implemented as a reduced capacity terminal, i.e., a Redcap terminal, and the second type of terminal is implemented as an ordinary terminal as an example. Schematically, the first type of terminal performs the cell reselection based on a cell reselection switch, e.g., an IntraFreqReselection (IFRI) in the MIB.

Second way, the cell reselection is performed based on a protocol or hardcode.

As an alternative embodiment, for the first type of terminal, the cell reselection is performed in a pre-agreed manner when the cell reselection is performed. For example, the cell reselection is performed in a manner predefined by the protocol when the cell reselection is performed; or, the cell reselection is performed in a hardcode manner when the cell reselection is performed.

Third way, the cell reselection is performed based on a cell reselection identifier in configuration information.

As an alternative embodiment, for the first type of terminal, the cell reselection is performed based on the cell reselection identifier configured in the SIB1 when the cell reselection is performed. The cell reselection identifier is an identifier configured for the first type of terminal. For example, for a Redcap user, there is a Redcap specific IFRI.

It is worth noting that, the above cell reselection ways are configured to determine whether the first type of terminal is allowed to perform an intra-frequency cell reselection, that is, the first type of terminal is allowed to perform the cell reselection, or is not allowed to perform the intra-frequency cell reselection.

In conclusion, with the method according to this embodiment, for the first type of terminal, the cell reselection way is determined through the cell reselection switch in the MIB, a protocol, hard code, the cell reselection identifier in the SIB1 after determining that the first type of terminal is in a cell-bar state, which provides a solution for the Redcap after the cell bar, and improves the cell access efficiency.

In an alternative embodiment, for an asymmetric spectrum time division duplexing (TDD) system, on a basis that the bandwidth of the initial BWP is wider than the bandwidth supported by the first type of terminal and there is a cell bar situation, following situations where the cell bar situation is generated may be included.

First, for an asymmetric spectrum, it is determined that the first type of terminal is barred from accessing the target cell in response to a misalignment between a center frequency point of the uplink initial BWP and a center frequency point of the downlink initial BWP.

That is, the first type of terminal obtains the configuration in the SIB 1, and compares the uplink initial BWP/downlink initial BWP with the maximum supported bandwidth. The cell bar situation is directly determined to occur in case that the uplink initial BWP/ downlink initial BWP is wider than the maximum supported bandwidth of the first type of terminal; otherwise, for the TDD system, it is further determined whether the center frequency point of the uplink initial BWP and the center frequency point of the downlink initial BWP are aligned. In case that it is determined that the center frequency point of the uplink initial BWP and the center frequency point of the downlink initial BWP are not aligned, it is determined that the first type of terminal is in the cell bar state for the target cell, and the cell reselection is performed after the cell bar situation occurs. For the cell reselection way, reference may be made to the cell reselection ways in the above embodiments.

It is worth noting that, the above comparison between the bandwidth of the uplink/downlink initial BWP and the maximum supported bandwidth, and the determination of alignment between the center frequency of the uplink initial BWP and the center frequency of the downlink initial BWP are two parallel determination processes. Or, on the basis that it is determined that no cell bar situation is generated based on the comparison between the bandwidth of the uplink/downlink initial BWP and the maximum supported bandwidth, the determination of alignment between the center frequency of the uplink and the center frequency of the downlink initial BWP is further performed.

Second, for the asymmetric spectrum, in response to the misalignment between the center frequency point of the uplink initial BWP and the center frequency point of the downlink initial BWP, and a situation for including an initial control resource set in the uplink initial BWP or the downlink initial BWP meeting a preset condition, it is determined that the first type of terminal is barred from accessing the target cell.

That is, the first type of terminal obtains the configuration in the SIB 1, compares the bandwidth of the uplink initial BWP/ downlink initial BWP with the maximum supported bandwidth, and directly determines the cell bar situation occurs when the uplink initial BWP/ downlink initial BWP is wider than the maximum supported bandwidth of the first type of terminal. Otherwise, for the TDD system, it is further determined whether the center frequency point of the uplink initial BWP and the center frequency point of the downlink initial BWP are aligned. In case that it is determined that the center frequency point of the uplink initial BWP and the center frequency point of the downlink initial BWP are not aligned, and the situation for including CORESET#0 in the uplink initial BWP or the downlink initial BWP meets the preset condition, it is determined that the first type of terminal is in the cell bar state for the target cell, and the cell reselection is performed after the cell bar situation occurs. For the cell reselection way, reference may be made the cell reselection way in the above embodiment.

It is worth noting that, the above preset condition is an additional condition for the cell bar situation determination. That is, it may not be directly determined that the first type of terminal is in the cell bar state for the target cell in case that it is determined that the center frequency point of the uplink initial BWP and the center frequency point of the downlink initial BWP are not aligned. It may be determined that the first type of terminal is in the cell bar state for the target cell in case that it is determined that the center frequency point of the uplink initial BWP and the center frequency point of the downlink initial BWP are not aligned, and that the uplink/downlink initial BWP meets the preset condition. In contrast, it is determined that the first type of terminal is not in the cell bar state for the target cell in case that it is determined that the center frequency point of the uplink initial BWP and the center frequency point of the downlink initial BWP are not aligned, and the uplink/downlink initial BWP does not meet the preset condition.

The preset condition is configured to indicate whether the uplink initial BWP/ downlink initial BWP includes the CORESET#0, and an additional preset condition includes at least one of
condition 1: the uplink initial BWP includes the CORESET#0;
condition 2: the uplink initial BWP does not include the CORESET#0;
condition 3: the downlink initial BWP include the CORESET#0;
condition 4: the downlink initial BWP does not include the CORESET#0.

Taking the above condition 1 as an example: as an embodiment, for the TDD system, in case that it is determined that the center frequency point of the uplink initial BWP and the center frequency point of the downlink initial BWP are not aligned, and the uplink initial BWP includes the CORESET#0, it is determined that the first type of terminal is in the cell bar state for the target cell, and the cell reselection is performed after the cell bar situation is determined.

As an embodiment, for the TDD system, in case that it is determined that the center frequency point of the uplink initial BWP and the center frequency point of the downlink initial BWP are not aligned, and the uplink initial BWP does not include the CORESET#0, it is determined that the first type of terminal is not in the cell bar state for the target cell.

Taking the above condition 2 as an example: as an embodiment, for the TDD system, in case that it is determined that the center frequency point of the uplink initial BWP and the center frequency point of the downlink initial BWP are not aligned, and the uplink initial BWP does not includes the CORESET#0, it is determined that the first type of terminal is in the cell bar state for the target cell, and the cell reselection is performed after the cell bar situation is determined.

As an embodiment, for the TDD system, in case that it is determined that the center frequency point of the uplink initial BWP and the center frequency point of the downlink initial BWP are not aligned, and the uplink initial BWP includes the CORESET#0, it is determined that the first type of terminal is not the cell bar state for the target cell.

Taking the above condition 3 as an example: as an embodiment, for the TDD system, in case that it is determined that the center frequency point of the uplink initial BWP and the center frequency point of the downlink initial BWP are not aligned, and the downlink initial BWP includes the CORESET#0, it is determined that the first type of terminal is in the cell bar state for the target cell, and the cell reselection is performed after the cell bar situation is determined.

As an embodiment, for the TDD system, in case that it is determined that the center frequency point of the uplink initial BWP and the center frequency point of the downlink initial BWP are not aligned, and the downlink initial BWP does not include the CORESET#0, it is determined that the first type of terminal is not in the cell bar state for the target cell.

Take the above condition 4 as an example: as an embodiment, for the TDD system, in case that it is determined that the center frequency point of the uplink initial BWP and the center frequency point of the downlink initial BWP are not aligned, and the downlink initial BWP does not include the CORESET#0, it is determined that the first type of terminal is in the cell bar state for the target cell, and the cell reselection is performed after the cell bar situation is determined.

As an embodiment, for the TDD system, in case that it is determined that the center frequency point of the uplink initial BWP and the center frequency point of the downlink initial BWP are not aligned, and the downlink initial BWP includes the CORESET#0, it is determined that the first type of terminal is not in the cell bar state for the target cell.

It is worth noting that, the above conditions 1, 2, 3 and 4 may be arbitrarily combined as the additional preset condition for determining the cell bar state.

In condition, with the method according to this embodiment, for the TDD system, after comparing the uplink/downlink initial BWP bandwidth with the supported bandwidth of the first type of terminal, when the central frequency point of the uplink BWP and the central frequency point of the downlink BWP are not aligned, it is determined that the first type of terminal is in the cell bar state for the target cell, thereby improving the cell access accuracy.

FIG. 7 is a block diagram illustrating an apparatus for accessing a cell according to an exemplary embodiment of the disclosure. As illustrated in FIG. 7, the apparatus includes:
a processing module 710, configured to obtain a bandwidth of an initial bandwidth part, BWP, configured by a target cell.

The processing module 710 is further configured to determine an access result of the target cell based on the bandwidth of the initial BWP and a supported bandwidth of a first type of terminal.

In an alternative embodiment, the processing module 710 is further configured to obtain a bandwidth of an uplink initial BWP configured by the target cell.

In an alternative embodiment, the apparatus further includes:
a receiving module 720, configured to receive first configuration information. The first configuration information includes an information field for configuring the uplink initial BWP.

The processing module 710 is further configured to determine the bandwidth of the uplink initial BWP configured for the first type of terminal in the first configuration information.

In an alternative embodiment, the apparatus further includes:
a receiving module 720, configured to receive first configuration information. The first configuration information includes an information field for configuring the uplink initial BWP.

The processing module 710 is further configured to, in response to the first configuration information including an uplink initial BWP configured for a second type of terminal and configuring no uplink initial BWP for the first type of terminal, determine a bandwidth of the uplink initial BWP configured for the second type of terminal as a bandwidth of an uplink initial BWP corresponding to the first type of terminal.

In an alternative embodiment, the processing module 710 is further configured to determine that the first type of terminal is barred from accessing the target cell in response to the bandwidth of the uplink initial BWP being wider than the supported bandwidth.

In an alternative embodiment, the processing module 710 is further configured to obtain a bandwidth of a downlink initial BWP configured by the target cell.

In an alternative embodiment, the apparatus further includes:
a receiving module 720, configured to receive second configuration information. The second configuration information includes an information field for configuring the downlink initial BWP.

The processing module 710 is further configured to determine the bandwidth of the downlink initial BWP configured for the first type of terminal in the second configuration information.

In an alternative embodiment, the apparatus further includes:
a receiving module 720, configured to receive second configuration information. The second configuration information includes a second information field for configuring the downlink initial BWP.

The processing module 710 is further configured to, in response to the second configuration information including a downlink initial BWP configured for a second type of terminal and configuring no downlink initial BWP for the first type of terminal, determine a bandwidth of the downlink initial BWP configured for the second type of terminal as a bandwidth of a downlink initial BWP corresponding to the first type of terminal.

In an alternative embodiment, the processing module 710 is further configured to determine a bandwidth of an initial control resource set configured in a master information block as a bandwidth of a downlink initial BWP corresponding to the first type of terminal.

In an alternative embodiment, the processing module 710 is further configured to obtain a first downlink initial BWP configured by the target cell, and the first downlink initial BWP being configured to receive a random access response, RAR.

The processing module 710 is further configured to obtain a second downlink initial BWP configured by the target cell, and the second downlink initial BWP is configured to receive a paging message.

In an alternative embodiment, the processing module 710 is further configured to determine that the first type of terminal is barred from accessing the target cell in response to the bandwidth of the downlink initial BWP being wider than the supported bandwidth.

In an alternative embodiment, the processing module 710 is further configured to perform cell reselection in response to the first type of terminal being barred from accessing the target cell.

In an alternative embodiment, the processing module 710 is further configured to perform the cell reselection based on a cell reselection switch in the master information block;
or,
perform the cell reselection based on a protocol or hardcode;
   or,
perform the cell reselection based on a cell reselection identifier in configuration information.

In an alternative embodiment, the processing module 710 is further configured to, for an asymmetric spectrum, determine that the first type of terminal is barred from accessing the target cell in response to a misalignment between a center frequency point of an uplink initial BWP and a center frequency point of a downlink initial BWP.

In an alternative embodiment, the processing module 710 is further configured to, for an asymmetric spectrum, determine that the first type of terminal is barred from accessing the target cell in response to a misalignment between a center frequency point of an uplink initial BWP and a center frequency point of a downlink initial BWP, and a situation for including the initial control resource set in the uplink initial BWP or the downlink initial BWP meeting a preset condition.

FIG. 8 is a block diagram illustrating an apparatus for accessing a cell according to another exemplary embodiment of the disclosure. As illustrated in FIG. 8, the apparatus includes:
a sending module 810, configured to send configuration information to a first type of terminal. The configuration information includes an information field for configuring an initial BWP. The first type of terminal is configured to determine an access result for a target cell based on a bandwidth of the initial BWP and a supported bandwidth.

In an alternative embodiment, the sending module 810 is further configured to send first configuration information to the first type of terminal.

The first configuration information includes an information field for configuring an uplink initial BWP for the first type of terminal; or the first configuration information includes an information field for configuring an uplink initial BWP for a second type of terminal and does not include the uplink initial BWP configured for the first type of terminal.

In an alternative embodiment, the sending module 810 is further configured to send second configuration information to the first type of terminal.

The second configuration information includes an information field for configuring a downlink initial BWP for the first type of terminal; or, the second configuration information includes an information field for configuring the downlink initial BWP for a second type of terminal and does not include the downlink initial BWP configured for the first type of terminal.

In an alternative embodiment, the downlink initial BWP includes a first downlink initial BWP, and the first downlink initial BWP is configured to receive a random access response, RAR.

The downlink initial BWP includes a second downlink initial BWP, and the second downlink initial BWP is configured to receive a paging message.

In conclusion, with the apparatus according to this embodiment, for the first type of terminal, the bandwidth of the initial BWP configured by the target cell are obtained, such that it is determined whether the first type of terminal is in a cell bar state based on the supported bandwidth of the first type of terminal and the bandwidth of the initial BWP configured by the target cell, thereby avoiding the problem that the Redcap terminal may be unable to determine whether there is a cell bar.

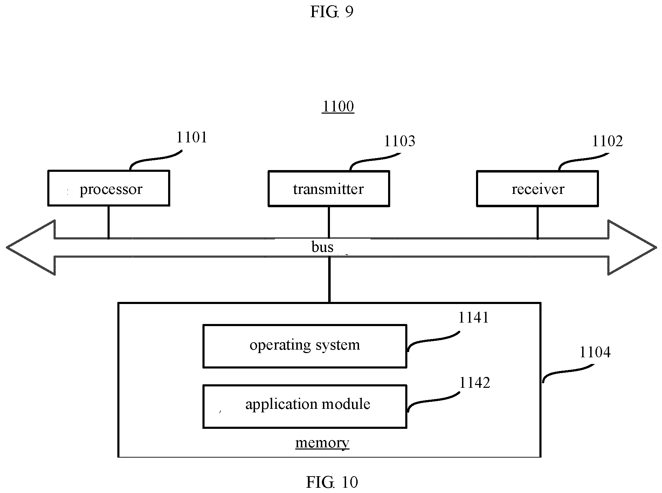

FIG. 9 is a block diagram illustrating a terminal according to an exemplary embodiment of the disclosure. The device includes a processor 901, a receiver 902, a transmitter 903, a memory 904 and a bus 905.

The processor 901 includes one or more processing cores. The processor 901 is configured to execute various functional applications and information processing by running software programs and modules.

The receiver 902 and the transmitter 903 may be implemented as a communication component. The communication component may be a communication chip.

The memory 904 is connected to the processor 901 through the bus 905.

The memory 904 may be configured to store at least one instruction. The processor 901 is configured to execute the at least one instruction to implement the steps in the above method embodiments.

In addition, the memory 904 may be implemented by any type of volatile or nonvolatile memory devices or a combination thereof. The volatile or nonvolatile memory device includes, but not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory and a programmable read-only memory (PROM).

In an exemplary embodiment, there is further provided a non-transitory computer readable storage medium, such as a memory including instructions. The above instructions may be executed by the processor of the terminal to implement the method executed at a terminal side in the above cell access method. For example, the non-transitory computer readable storage medium may be the ROM, a random access memory (RAM), a CD-ROM, a magnetic tape, a floppy disk, an optical data storage device, etc.

A non-transitory computer readable storage medium enables the terminal to execute the above cell access method when the instructions in the non-transitory computer storage medium are executed by the processor of the terminal.

FIG. 10 is a block diagram illustrating an access network device 1100 according to an exemplary embodiment of the disclosure. The access network device 100 may be a base station.

The access network device 1100 may include: a processor 1101, a receiver 1102, a transmitter 1103 and a memory 1104. The receiver 1102, the transmitter 1103 and the memory 1104 are respectively connected with the processor 1101 through the bus.

The processor 1101 includes one or more processing cores. The processor 1101 executes the method executed by the access network device in the cell access method according to embodiments of the disclosure by running software programs and modules. The memory 1104 may be configured to store the software programs and modules. In detail, the memory 1104 may store an operating system 1141 and an application module 1142 required by at least one function. The receiver 1102 is configured to receive communication data sent by other devices, and the transmitter 1103 is configured to send the communication data to other devices.

An exemplary embodiment of the disclosure also provides a communication system, which includes a terminal and an access network device.

The terminal includes the cell access apparatus provided in the embodiment illustrated in FIG. 7.

The access network device includes the cell access apparatus provided in the embodiment illustrated in FIG. 8.

An exemplary embodiment of the disclosure further provides a communication system. The communication system includes the terminal and the access network device.

The terminal includes the terminal provided by the embodiment illustrated in FIG 9.

The access network device includes the access network device provided in the embodiment illustrated in FIG. 10.

An exemplary embodiment of the disclosure also provides a computer readable storage medium. The computer readable storage medium has at least one instruction, at least one program, a code set or an instruction set stored thereon. The at least one instruction, the at least one program, the code set or the instruction set are loaded and executed by the processor to implement steps executed by the terminal or the access network device in the cell access method according to the above method embodiments.

It is further understood that, term "a plurality" in the disclosure refers to two or more. Terms "and/or" describe an association relationship of associated objects, representing that there may be three kinds of relationships. For example, A and/or B may represent three cases, that is, A alone, A and B simultaneously, and B alone. The character "/" generally represents that context objects are in an "or" relationship.

Other embodiments of the disclosure will be apparent to those skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the present disclosure being indicated by the following claims.

It will be appreciated that, the disclosure is not limited to the exaction construction that has been described above and illustrated in the accompanying drawings, and that various modifications and changes can be made without departing from the scope thereof. It is intended that the scope of the disclosure only be limited by the appended claims.

## Claims

1. A cell access method, performed by a first type of terminal, comprising:
obtaining a bandwidth of an initial bandwidth part (BWP) configured by a target cell; and
determining an access result for the target cell based on the bandwidth of the initial BWP and a supported bandwidth of the first type of terminal.

2. The method of claim 1, wherein obtaining the bandwidth of the initial BWP configured by the target cell comprises:
obtaining a bandwidth of an uplink initial BWP configured by the target cell.

3. The method of claim 2, wherein obtaining the bandwidth of the uplink initial BWP configured by the target cell comprises:
receiving a first configuration information, the first configuration information comprising an information field for configuring the uplink initial BWP for the first type of terminal; and
determining the bandwidth of the uplink initial BWP configured for the first type of terminal in the first configuration information.

4. The method of claim 2, wherein obtaining the bandwidth of the uplink initial BWP configured by the target cell comprises:
receiving a first configuration information, the first configuration information comprising an information field for configuring the uplink initial BWP; and
in response to the first configuration information comprising an uplink initial BWP configured for a second type of terminal and configuring no uplink initial BWP for the first type of terminal, determining the bandwidth of the uplink initial BWP configured for the second type of terminal as the bandwidth of an uplink initial BWP corresponding to the first type of terminal.

5. The method of claim 2, wherein determining the access result for the target cell based on the bandwidth of the initial BWP and the supported bandwidth of the first type of terminal comprises:
determining that the first type of terminal is barred from accessing the target cell in response to the bandwidth of the uplink initial BWP being wider than the supported bandwidth.

6. The method of claim 1, wherein obtaining the bandwidth of the initial BWP configured by the target cell comprises:
obtaining a bandwidth of a downlink initial BWP configured by the target cell.

7. The method of claim 6, wherein obtaining the bandwidth of the downlink initial BWP configured by the target cell comprises:
receiving a second configuration information, the second configuration information comprising an information field for configuring the downlink initial BWP for the first type of terminal; and
determining the bandwidth of the downlink initial BWP configured for the first type of terminal in the second configuration information.

8. The method of claim 6, wherein obtaining the bandwidth of the downlink initial BWP configured by the target cell comprises:
receiving a second configuration information, the second configuration information comprising a second information field for configuring the downlink initial BWP; and
in response to the second configuration information comprising a downlink initial BWP configured for a second type of terminal and configuring no downlink initial BWP for the first type of terminal, determining the bandwidth of the downlink initial BWP configured for the second type of terminal as the bandwidth of a downlink initial BWP corresponding to the first type of terminal.

9. The method of claim 6, wherein obtaining the bandwidth of the downlink initial BWP configured by the target cell comprises:
determining a bandwidth of an initial control resource set configured in a master information block as a bandwidth of a downlink initial BWP corresponding to the first type of terminal.

10. The method of claim 6, further comprising:
obtaining a first downlink initial BWP configured by the target cell, the first downlink initial BWP being configured to receive a random access response (RAR); and
obtaining a second downlink initial BWP configured by the target cell, the second downlink initial BWP being configured to receive a paging message.

11. The method of claim 6, wherein determining the access result for the target cell based on the bandwidth of the initial BWP and the supported bandwidth of the first type of terminal comprises:
determining that the first type of terminal is barred from accessing the target cell in response to the bandwidth of the downlink initial BWP being wider than the supported bandwidth.

12. The method of any of claims 1 to 11, further comprising:
performing cell reselection in response to the first type of terminal being barred from accessing the target cell.

13. The method of claim 12, further comprising:
performing the cell reselection based on a cell reselection switch in a master information block;
or,
performing the cell reselection based on a protocol or hardcode;
or,
performing the cell reselection based on a cell reselection identifier in a configuration information.

14. The method of any of claims 1 to 11, further comprising:
for an asymmetric spectrum, determining that the first type of terminal is barred from accessing the target cell in response to a misalignment between a center frequency point of an uplink initial BWP and a center frequency point of a downlink initial BWP.

15. The method of any of claims 1 to 11, further comprising:
for an asymmetric spectrum, determining that the first type of terminal is barred from accessing the target cell in response to a misalignment between a center frequency point of an uplink initial BWP and a center frequency point of a downlink initial BWP and a situation for including an initial control resource set in the uplink initial BWP or the downlink initial BWP meeting a preset condition.

16. A cell access method, performed by an access network device of a target cell, comprising:
sending a configuration information to a first type of terminal, the configuration information comprising an information field for configuring an initial bandwidth part (BWP).

17. The method of claim 16, wherein sending the configuration information to the first type of terminal comprises:
sending a first configuration information to the first type of terminal,
wherein the first configuration information comprises an information field for configuring an uplink initial BWP for the first type of terminal; or the first configuration information comprises an information field for configuring an uplink initial BWP for a second type of terminal and does not comprise the uplink initial BWP configured for the first type of terminal.

18. The method of claim 16, wherein sending the configuration information to the first type of terminal comprises:
sending a second configuration information to the first type of terminal;
wherein the second configuration information comprises an information field for configuring a downlink initial BWP for the first type of terminal; or, the second configuration information comprising an information field for configuring the downlink initial BWP for a second type of terminal and does not comprise the downlink initial BWP configured for the first type of terminal.

19. The method of claim 18, wherein
the downlink initial BWP comprises a first downlink initial BWP, and the first downlink initial BWP is configured to receive a random access response (RAR); and
the downlink initial BWP comprises a second downlink initial BWP, and the second downlink initial BWP is configured to receive a paging message.

20. A cell access apparatus, comprising:
a processing module, configured to obtain a bandwidth of an initial bandwidth part (BWP) configured by a target cell;
wherein the processing module is further configured to determine an access result for the target cell based on the bandwidth of the initial BWP and a supported bandwidth of a first type of terminal.

21. The apparatus of claim 20, wherein the processing module is further configured to:
obtain a bandwidth of an uplink initial BWP configured by the target cell.

22. The apparatus of claim 21, further comprising:
a receiving module, configured to receive a first configuration information, the first configuration information comprising an information field for configuring the uplink initial BWP;
wherein the processing module is further configured to determine the bandwidth of the uplink initial BWP configured for the first type of terminal in the first configuration information.

23. The apparatus of claim 21, further comprising:
a receiving module, configured to receive a first configuration information, the first configuration information comprising an information field for configuring the uplink initial BWP; and
wherein the processing module is further configured to, in response to the first configuration information comprising an uplink initial BWP configured for a second type of terminal and configuring no uplink initial BWP for the first type of terminal, determine the bandwidth of the uplink initial BWP configured for the second type of terminal as the bandwidth of an uplink initial BWP corresponding to the first type of terminal.

24. The apparatus of claim 21, wherein the processing module is further configured to determine that the first type of terminal is barred from accessing the target cell in response to the bandwidth of the uplink initial BWP being wider than the supported bandwidth.

25. The apparatus of claim 20, wherein the processing module is further configured to obtain a bandwidth of a downlink initial BWP configured by the target cell.

26. The apparatus of claim 25, further comprising:
a receiving module, configured to receive a second configuration information, the second configuration information comprising an information field for configuring the downlink initial BWP;
wherein the processing module is further configured to determine the bandwidth of the downlink initial BWP configured for the first type of terminal in the second configuration information.

27. The apparatus of claim 25, further comprising:
a receiving module, configured to receive a second configuration information, the second configuration information comprising a second information field for configuring the downlink initial BWP;
wherein the processing module is further configured to, in response to the second configuration information comprising a downlink initial BWP configured for a second type of terminal and configuring no downlink initial BWP for the first type of terminal, determine the bandwidth of the downlink initial BWP configured for the second type of terminal as the bandwidth of a downlink initial BWP corresponding to the first type of terminal.

28. The apparatus of claim 25, wherein the processing module is further configured to determine a bandwidth of an initial control resource set configured in a master information block as a bandwidth of a downlink initial BWP corresponding to the first type of terminal.

29. The apparatus of claim 25, wherein the processing module is further configured to obtain a first downlink initial BWP configured by the target cell, the first downlink initial BWP being configured to receive a random access response (RAR);
wherein the processing module is further configured to obtain a second downlink initial BWP configured by the target cell, the second downlink initial BWP being configured to receive a paging message.

30. The apparatus of claim 25, wherein the processing module is further configured to determine that the first type of terminal is barred from accessing the target cell to in response to the bandwidth of the downlink initial BWP being wider than the supported bandwidth.

31. The apparatus of any of claims 20 to 30, wherein the processing module is further configured to perform cell reselection in response to the first type of terminal being barred from accessing the target cell.

32. The apparatus of claim 31, wherein the processing module is further configured to perform the cell reselection based on a cell reselection switch in a master information block;
or,
perform the cell reselection based on a protocol or hardcode;
or,
perform the cell reselection based on a cell reselection identifier in a configuration information.

33. The apparatus of any of claims 20 to 30, wherein the processing module is further configured to, for an asymmetric spectrum, determine that the first type of terminal is barred from accessing the target cell in response to a misalignment between a center frequency point of an uplink initial BWP and a center frequency point of a downlink initial BWP.

34. The apparatus of any of claims 20 to 30, wherein the processing module is further configured to, for an asymmetric spectrum, determine that the first type of terminal is barred from accessing the target cell in response to a misalignment between a center frequency point of an uplink initial BWP and a center frequency point of a downlink initial BWP and a situation for including an initial control resource set in the uplink initial BWP or the downlink initial BWP meeting a preset condition.

35. A cell access apparatus, comprising:
a sending module, configured to send a configuration information to a first type of terminal, the configuration information comprising an information field for configuring an initial bandwidth part (BWP).

36. The apparatus of claim 35, wherein the sending module is further configured to send a first configuration information to the first type of terminal,
wherein the first configuration information comprises an information field for configuring an uplink initial BWP for the first type of terminal; or the first configuration information comprises an information field for configuring an uplink initial BWP for a second type of terminal and does not comprise the uplink initial BWP configured for the first type of terminal.

37. The apparatus of claim 35, wherein the sending module is further configured to send a second configuration information to the first type of terminal;
wherein the second configuration information comprises an information field for configuring a downlink initial BWP for the first type of terminal; or, the second configuration information comprises an information field for configuring the downlink initial BWP for a second type of terminal and does not comprise the downlink initial BWP configured for the first type of terminal.

38. The apparatus of claim 37, wherein
the downlink initial BWP comprises a first downlink initial BWP, and the first downlink initial BWP is configured to receive a random access response (RAR); and
the downlink initial BWP comprises a second downlink initial BWP, and the second downlink initial BWP is configured to receive a paging message.

39. A terminal, comprising:
a processor;
a transceiver, connected to the processor; and
a memory for storing an executable signaling of the processor;
wherein the processor is configured to load and to execute the executable signaling to implement the cell access method according to any one of claims 1 to 15.

40. An access network device, comprising:
a processor;
a transceiver, connected to the processor; and
a memory for storing an executable signaling of the processor;
wherein the processor is configured to load and to execute the executable signaling to implement the cell access method according to any one of claims 16 to 19.

41. A computer-readable storage medium having at least one instruction, at least one program, a code set or an instruction set stored thereon, wherein the at least one instruction, the at least one program, the code set or the instruction set is loaded and executed by a processor to implement the cell access method according to any one of claims 1 to 19.
